# FASCICULE DE BREVET EUROPEEN

(11) **EP 4 563 873 B1**
(45) Date de publication et mention de la délivrance du brevet: **19.08.2026**
(21) Numéro de dépôt: 24212589.6
(22) Date de dépôt: 13.11.2024
(51) Int. Cl.: F17C 3/08

(54) **RÉSERVOIR CRYOGÉNIQUE**
KRYOGENER TANK
CRYOGENIC TANK

(30) Priorité: 28.11.2023 FR 2313163
(43) Date de publication de la demande: 04.06.2025
(73) Titulaire: L'Air Liquide, Société Anonyme pour l'Etude et l'Exploitation des Procédés Georges Claude, 75007 Paris (FR)
(72) Inventeur: PETITPAS, Guillaume, 78350 Jouy-en-Josas (FR); BOUIN, Marius, 38360 Sassenage (FR)
(74) Mandataire: Air Liquide

(56) Documents cités:
- EP-A1- 4 112 993
- GB-A- 2 488 461
- KR-B1- 102 360 225
- US-A- 4 176 761

## Description

La présente invention porte sur un réservoir cryogénique de stockage de fluide liquéfié et sur un procédé d'assemblage d'un tel réservoir.

Les réservoirs cryogéniques sont généralement constitués de deux enveloppes assemblées l'une dans l'autre, séparées entre elles par un espace permettant une isolation thermique et éventuellement évacué sous vide. Le fluide cryogénique est stocké dans l'enveloppe interne. La mise en œuvre des supports, c'est-à-dire la liaison mécanique entre l'enveloppe externe et l'enveloppe interne, doit remplir la fonction de limiter les entrées thermiques par conduction tout en assurant une tenue adaptée aux sollicitations mécaniques que le réservoir va subir. Il est connu de réaliser des réservoirs cryogéniques comportant des supports, généralement en acier, sous la forme d'un col (glissant ou non) et/ou de tirants.

Ces solutions ne sont pas adaptées à la réalisation de réservoirs cryogéniques compacts, notamment parce qu'elles comportent des volumes morts importants et non utilisables pour contenir le fluide. Devant contenir des fluides particulièrement sensibles aux entrées thermiques, tels que l'hydrogène et notamment sous la forme liquide, les solutions connues favorisent la performance thermique au détriment du volume utile de stockage.

Un exemple de réservoir cryogénique est divulgué dans le document US 4 176 761.

La présente invention vise à remédier efficacement à ces inconvénients en proposant un réservoir cryogénique de stockage de fluide liquéfié comprenant une enveloppe interne délimitant un volume de stockage pour du fluide liquéfié et une enveloppe externe disposée de façon espacée autour de l'enveloppe interne, l'espace entre lesdites enveloppes interne et externe comprenant une isolation thermique, les enveloppes interne et externe s'étendant selon une direction longitudinale entre deux extrémités longitudinales, les enveloppes interne et externe présentant, au niveau de chaque extrémité longitudinale, une portion en forme de dôme, le réservoir comprenant une structure de maintien de l'enveloppe interne dans l'enveloppe externe, la structure de maintien comprenant une première liaison mécanique entre la première extrémité longitudinale de l'enveloppe interne et la première extrémité longitudinale de l'enveloppe externe, et une deuxième liaison mécanique entre la seconde extrémité longitudinale de l'enveloppe interne et la seconde extrémité longitudinale de l'enveloppe externe, la première liaison mécanique étant solidaire d'une part d'une région courbe du dôme de la première extrémité de l'enveloppe externe et d'autre part d'une région courbe du dôme de la première extrémité de l'enveloppe interne, la deuxième liaison mécanique étant solidaire d'une part d'une région courbe du dôme de la seconde extrémité de l'enveloppe externe et d'autre part d'une région courbe du dôme de la seconde extrémité de l'enveloppe interne.

L'invention permet ainsi de proposer une architecture compacte plus adaptée, avec des volumes morts réduits, un volume de stockage de fluide cryogénique optimisé, et qui pallie à tout ou partie des inconvénients cités ci-dessus.

L'invention peut être avantageusement appliquée à des réservoirs cryogéniques fixes ou mobiles, notamment des semi-remorques de transport de gaz liquéfiés, des réservoirs de carburants cryogéniques embarqués. Les fluides concernés sont par exemple l'hélium, l'hydrogène, le méthane, le gaz naturel, ou tout autre fluide ou mélange de fluides à des températures cryogéniques.

Selon une réalisation, chaque portion en forme de dôme présente une section transversale, dans un plan orthogonal à la direction longitudinale, de largeur qui varie entre une largeur minimum, au niveau de l'extrémité longitudinale, et une largeur maximum, la première liaison mécanique étant solidaire du dôme de la première extrémité de l'enveloppe externe dans une région où la largeur de la section du dôme de l'enveloppe externe est comprise entre 50% et 100% de la largeur maximum, et solidaire du dôme de la première extrémité de l'enveloppe interne dans une région où la largeur de la section du dôme de l'enveloppe interne est comprise entre 50% et 100% de la largeur maximum.

Selon une réalisation, la deuxième liaison mécanique est solidaire de la seconde extrémité de l'enveloppe externe dans une région où la largeur de la section du dôme de l'enveloppe externe est comprise entre 50% et 100% de la largeur maximum, et/ou de la seconde extrémité de l'enveloppe interne dans une région où la largeur de la section du dôme de l'enveloppe interne est comprise entre 50% et 100% de la largeur maximum.

Selon une réalisation, au moins une des liaisons mécaniques est solidaire du dôme respectif de l'enveloppe externe dans une région où la largeur de la section du dôme de l'enveloppe externe est comprise entre 80% et 100% de la largeur maximum, et/ou solidaire du dôme respectif de l'enveloppe interne dans une région où la largeur de la section du dôme de l'enveloppe interne est comprise entre 80% et 100% de la largeur maximum.

Selon une réalisation, au moins une des liaisons mécaniques est solidaire du dôme respectif de l'enveloppe externe dans une région où la largeur de la section du dôme de l'enveloppe externe est supérieure à 50% et strictement inférieure à 100% de la largeur maximum, et/ou solidaire du dôme respectif de l'enveloppe interne dans une région où la largeur de la section du dôme de l'enveloppe interne est supérieure à 50% et strictement inférieure à 100% de la largeur maximum.

Selon une réalisation, la première liaison mécanique est fixée rigidement à l'enveloppe externe et fixée à l'enveloppe interne de sorte à pouvoir à se déplacer et/ou se déformer en réponse à une dilatation et/ou une contraction relative de l'enveloppe interne.

Selon une réalisation, la première et/ou la deuxième liaison mécanique comprend plusieurs structures d'appui réparties angulairement autour d'un axe central.

Selon une réalisation, les structures d'appui font partie d'un anneau de liaison s'étendant autour de l'axe central et délimitant un volume ouvert dont la section, dans un plan orthogonal à l'axe central, présente une variation monotone lorsque l'on se déplace le long de l'axe central.

Selon une réalisation, l'anneau de liaison possède une face intérieure en vis-à-vis du dôme de l'enveloppe interne et une face extérieure en vis-à-vis du dôme de l'enveloppe externe, la face intérieure ayant un profil complémentaire du profil du dôme de l'enveloppe interne.

Selon une réalisation, la face extérieure de l'anneau de liaison a un profil complémentaire du profil du dôme de l'enveloppe externe.

Selon une réalisation, la première et/ou la deuxième liaison mécanique comprend au moins trois structures d'appui, comprenant chacune au moins une protubérance intérieure faisant saillie de la face intérieure de l'anneau de liaison et au moins une protubérance extérieure faisant saillie de la face extérieure de l'anneau de liaison, l'anneau de liaison étant solidaire de l'enveloppe interne et respectivement externe uniquement au niveau de ces protubérances.

Selon une réalisation, les structures d'appui sont réparties angulairement autour de l'axe central de manière uniforme.

Selon une réalisation, l'axe central est parallèle ou coïncide avec l'axe longitudinal.

Selon une réalisation, le volume ouvert délimité par l'anneau de liaison présente une section de forme sensiblement elliptique.

Selon une réalisation, le volume ouvert délimité par l'anneau de liaison présente une section de forme sensiblement circulaire.

Selon une réalisation, les protubérances extérieures sont soudées ou collées à l'enveloppe externe, et les protubérances intérieures sont soudées ou collées à l'enveloppe interne.

Selon une réalisation, la structure de maintien comprend uniquement les première et deuxième liaisons mécaniques.

Selon une réalisation, la structure de maintien comprend au moins une troisième liaison mécanique positionnée longitudinalement, selon l'axe longitudinal, entre la première liaison mécanique et la deuxième liaison mécanique.

L'invention concerne en outre un procédé d'assemblage d'un réservoir tel que décrit ci-dessus, l'axe longitudinal étant horizontal lors de l'assemblage, comprenant les étapes successives suivantes
- a. fixation de la première liaison mécanique au dôme de la première extrémité de l'enveloppe interne;
- b. insertion de l'ensemble ainsi obtenu dans l'enveloppe externe;
- c. fixation de la première liaison mécanique au dôme de la première extrémité de l'enveloppe externe.

L'invention concerne en outre un procédé d'assemblage d'un réservoir tel que décrit ci-dessus, l'axe longitudinal étant vertical lors de l'assemblage, comprenant les étapes successives suivantes
- a. fixation de la première liaison mécanique au dôme de la première extrémité de l'enveloppe externe;
- b. insertion de l'enveloppe interne dans l'enveloppe externe;
- c. fixation de la première liaison mécanique au dôme de la première extrémité de l'enveloppe interne.

L'invention sera mieux comprise à la lecture de la description qui suit et à l'examen des figures qui l'accompagnent. Ces figures ne sont données qu'à titre illustratif mais nullement limitatif de l'invention.
[Fig. 1] La figure 1 représente une vue en coupe verticale et longitudinale, schématique et partielle, illustrant un premier exemple de réalisation possible de l'invention ;
[Fig. 2] la figure 2 représente une vue en coupe, schématique et partielle, d'un détail de l'une quelconque des extrémités longitudinales de l'enveloppe interne ou externe de la figure 1 ;
[Fig. 3] la figure 3 représente une vue en coupe, schématique et partielle, d'un détail d'une première extrémité du réservoir de l'exemple de réalisation de la figure 1 ;
[Fig. 4] la figure 4 représente une vue en perspective, schématique et partielle, illustrant un exemple de réalisation des supports de la figure 1 ;
[Fig. 5] la figure 5 représente une vue en coupe verticale et longitudinale, schématique et partielle, illustrant un deuxième exemple de réalisation possible de l'invention.

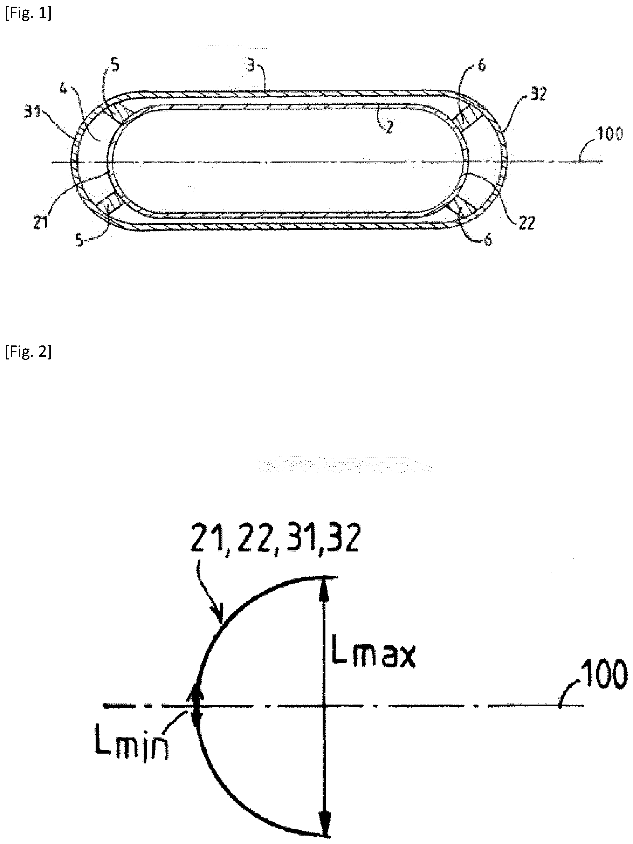

Le réservoir cryogénique 1 illustré à titre d'exemple à la figure 1 comprend une enveloppe interne 2 délimitant un volume de stockage pour du fluide liquéfié et une enveloppe externe 3 disposée de façon espacée autour de l'enveloppe interne 2. L'espace entre lesdites enveloppes interne 2 et externe 3 comprend une isolation thermique 4. L'isolation thermique peut notamment comprendre de l'isolant multi-couches, connu également sous le nom de MLI ("multi-layer insulation"), de la perlite, de la mousse, des billes de verre ou tout autre isolant adapté. L'isolation thermique peut également être sous vide, l'espace entre lesdites enveloppes étant alors évacué à une pression inférieure à 10⁻² mbar, et de préférence comprise entre 10⁻⁴ mbar et 10⁻⁷ mbar.

Dans l'exemple illustré, les enveloppes interne 2 et externe 3 s'étendent selon une direction longitudinale 100 entre deux extrémités longitudinales. Les enveloppes interne et externe présentent, au niveau de chaque extrémité longitudinale, une portion d'extrémité en forme de dôme 21, 31, 22, 32. Un corps principal, dit virole, s'étend entre les deux extrémités longitudinales du réservoir. La virole est de préférence un cylindre de section circulaire, mais en alternative elle pourrait avoir une section elliptique ou d'une autre forme adaptée aux besoins.

D'autres formes sont également possibles pour au moins l'une des portions d'extrémité 21, 31, 22, 32 de l'enveloppe interne 2 et/ou de l'enveloppe externe 3, par exemple en cylindre, un parallélépipède ou autre polyèdre, et notamment dans le cas où une boîte à vanne est associée au réservoir.

Le réservoir 1 comprend une structure de maintien de l'enveloppe interne 2 dans l'enveloppe externe 3. La structure de maintien comprend une première liaison mécanique 5 entre la première extrémité longitudinale 21 de l'enveloppe interne 2 et la première extrémité longitudinale 31 de l'enveloppe externe 3, et une deuxième liaison mécanique 6 entre la seconde extrémité longitudinale 22 de l'enveloppe interne 2 et la seconde extrémité longitudinale 32 de l'enveloppe externe 3.

La première liaison mécanique 5 est solidaire, d'une part, d'une région courbe du dôme de la première extrémité 31 de l'enveloppe externe 3 et, d'autre part, d'une région courbe du dôme de la première extrémité 21 de l'enveloppe interne 2.

La deuxième liaison mécanique 6 est solidaire, d'une part, d'une région courbe du dôme de la seconde extrémité 32 de l'enveloppe externe 3 et, d'autre part, d'une région courbe du dôme de la seconde extrémité 22 de l'enveloppe interne 2.

Comme illustré en figure 2, chacune des portions d'extrémité 21, 31, 22, 32 peut présenter une section transversale, dans un plan orthogonal à l'axe longitudinal 100, de largeur qui varie entre une largeur minimum, au niveau de l'extrémité longitudinale, et une largeur maximum au niveau de la jonction avec la virole. Dans le cas d'une virole cylindrique et de deux extrémités en forme de dôme, la largeur maximum correspond ainsi au diamètre de la virole.

La première liaison mécanique 5 peut être solidaire du dôme de la première extrémité 31 de l'enveloppe externe 3 dans une région où la largeur de la section du dôme 31 de l'enveloppe externe 3 est comprise entre 50% et 100% de la largeur maximum, et de préférence entre 80% et 100% de la largeur maximum.

La première liaison mécanique 5 peut être solidaire du dôme de la première extrémité 21 de l'enveloppe interne 2 dans une région où la largeur de la section du dôme 21 de l'enveloppe interne 2 est comprise entre 50% et 100% de la largeur maximum, et de préférence entre 80% et 100% de la largeur maximum.

La deuxième liaison mécanique 6 peut être solidaire de la seconde extrémité 32 de l'enveloppe externe 3 dans une région où la largeur de la section du dôme 32 de l'enveloppe externe 3 est comprise entre 50% et 100% de la largeur maximum, et de préférence entre 80% et 100% de la largeur maximum.

La deuxième liaison mécanique 6 peut être solidaire de la seconde extrémité 22 de l'enveloppe 2 interne dans une région où la largeur de la section du dôme 22 de l'enveloppe interne 2 est comprise entre 50% et 100% de la largeur maximum, et de préférence entre 80% et 100% de la largeur maximum.

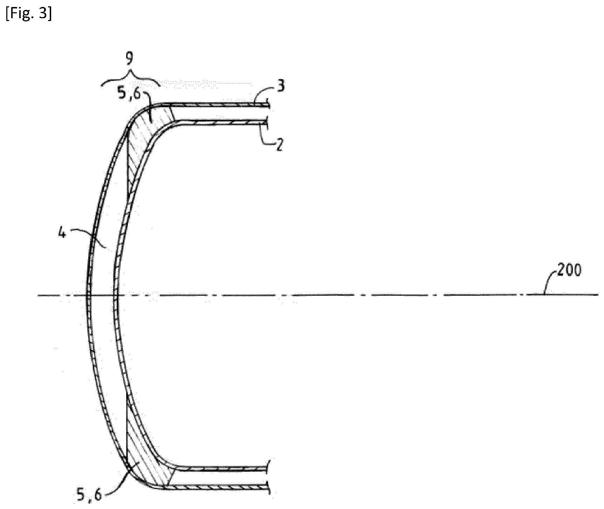

C'est-à-dire que les liaisons mécaniques 5, 6 sont mécaniquement attachées au dôme 31, 32 de l'extrémité de l'enveloppe externe 3, respectivement au dôme 21, 22 de l'extrémité de l'enveloppe interne 2, dans une zone périphérique de celui-ci et que au moins une partie de cette attache est située dans une région où la largeur de la section du dôme 21, 22, 31, 32 est strictement inférieure à la largeur maximum. Ainsi, comme illustré à la figure 3, la liaison mécanique 5, 6 peut être solidaire de l'enveloppe externe 3, respectivement de l'enveloppe interne 2, dans une région qui s'étend à cheval entre le dôme et la virole.

Un tel positionnement des liaisons mécaniques 5,6 permet notamment de réduire la dimension de l'espace entre l'enveloppe interne 2 et l'enveloppe externe 3, réduisant ainsi l'encombrement total et augmentant l'efficacité volumétrique du système. C'est-à-dire que le rapport entre le volume utile pour contenir le fluide cryogénique et le volume total du réservoir est plus élevé que pour un réservoir cryogénique de l'état de l'art. Ainsi, par exemple, un réservoir réalisé selon l'invention, et présentant le même encombrement qu'un réservoir de l'état de l'art, comportera un volume utile plus important. Alternativement, un réservoir selon l'invention, et comportant le même volume utile qu'un réservoir selon l'état de l'art, aura un encombrement total moindre.

On obtient également une résistance accrue du système aux efforts et contraintes radiales, tout en conservant un niveau faible d'entrées thermiques.

De plus, en décalant les liaisons mécaniques, par exemple sous forme d'anneaux, de la virole vers les dômes, l'isolation thermique de la virole est plus efficace et plus simple à mettre en œuvre. Toutes les entrées thermiques sont en effet déplacées au niveau du dôme.

Dans d'autres mode de réalisation, toutes les liaisons mécaniques 5, 6, ou au moins une partie d'entre elles, sont mécaniquement attachées au dôme 31, 32 de l'extrémité de l'enveloppe externe 3, respectivement au dôme 21, 22 de l'extrémité de l'enveloppe interne 2, dans une zone périphérique de celui-ci et l'ensemble de cette attache est située dans une région où la largeur de la section du dôme 21, 22, 31, 32 est strictement inférieure à la largeur maximum. Dans ce cas, les liaisons mécaniques 5, 6 ne sont pas en contact direct avec la virole et l'encombrement peut être ultérieurement réduit.

Afin de minimiser les entrées thermiques, les liaisons mécaniques 5,6 sont de préférence réalisées en un matériau présentant une faible conductivité thermique, notamment inférieure à 1 W m⁻¹ K⁻¹. Des exemples de matériaux adaptés sont les composites en fibre de verre, par exemple de l'époxy tel que les types G10 ou G11.

La première liaison mécanique 5 peut être fixée rigidement à l'enveloppe externe 3, et fixée à l'enveloppe interne 2 de sorte à pouvoir à se déplacer et/ou se déformer en réponse à une dilatation et/ou une contraction relative de l'enveloppe interne.

La deuxième liaison mécanique 6 peut alors être fixée rigidement à la fois à l'enveloppe externe 3 et à l'enveloppe interne 2. De préférence, la ou les conduites d'amenée et/ou de soutirage de fluide sont montées au niveau de la seconde extrémité longitudinale, où la liaison 6 est fixée rigidement.

Ainsi la première liaison mécanique 5 constitue une liaison entre les deux enveloppes 2, 3 qui est plus déformable (liaison relativement plus flexible) que la deuxième liaison mécanique 6 (liaison relativement plus rigide). C'est-à-dire que la première liaison mécanique 5 est configurée pour permettre, lors d'un différentiel de température entre les deux enveloppes 2, 3 générant une rétraction ou une dilatation relative des enveloppes 2, 3, un déplacement longitudinal relatif entre les deux enveloppes 2, 3 au niveau de la première extrémité qui est supérieur au déplacement longitudinal relatif autorisé par la deuxième liaison mécanique 6 au niveau de la seconde extrémité.

Ces degrés de flexibilité ou rigidité relatifs peuvent être choisis en adaptant les dimensions des liaisons mécaniques 5, 6 et/ou leurs matériaux. Par exemple, la liaison la plus déformable peut être réalisée en mousse ou autre matériau composite adapté, et la liaison la plus rigide peut être réalisée en époxy.

Par rapport à des liaisons mécaniques en acier inox de l'état de l'art, il est ainsi possible d'alléger le système, tout en garantissant le maintien de l'enveloppe interne 2 dans l'enveloppe externe 3 et une résistance optimale aux contraintes mécaniques.

Ainsi, l'enveloppe interne 2 peut être supportée dans l'enveloppe externe 3 par deux liaisons mécaniques 5, 6 dont l'une est relativement plus déformable et configurée notamment pour se déformer lors de la contraction relative de l'enveloppe interne 2 mise en froid. Cette déformation est configurée pour permettre d'absorber les variations de dimensions relatives des deux enveloppes 2, 3 sans nuire au maintien de l'enveloppe interne dans l'enveloppe externe 3 et sans affecter l'isolation thermique. Ceci permet également d'éviter que la contraction relative de l'enveloppe interne provoque des contraintes mécaniques excessives sur les conduites.

En particulier, cette architecture permet une déformation de la première liaison mécanique 5 qui est proche de la contraction longitudinale relative de l'enveloppe interne 2 (et qui permet cette contraction de l'enveloppe interne 2).

Lors du remplissage de l'enveloppe interne 2 avec du liquide cryogénique, le gradient thermique (de la température ambiante extérieure à la température du liquide cryogénique à l'intérieur : par exemple entre -269°C et -180°C) que subira cette première liaison mécanique 5 permettra d'accompagner la contraction thermique relative de l'enveloppe interne 2 au niveau de la première extrémité alors que la seconde extrémité (au niveau de la deuxième liaison mécanique 6, considérée comme un point fixe), subira une déformation nulle ou plus faible. Lors de sa contraction, l'enveloppe interne 2 (au moins une extrémité reliée à l'enveloppe interne 2) va se déplacer longitudinalement relativement vers la seconde extrémité (relativement fixe).

A noter que le terme « flexible » utilisé ci-dessus ne signifie pas forcément que la première liaison mécanique 5 est « flexible » intrinsèquement. En revanche, cette première liaison mécanique 5 est configurée pour se déformer (déplacement longitudinal) en réponse aux changements de température tout en permettant la tenue aux efforts radiaux. En particulier, la première liaison mécanique 5 est ainsi apte et configurée pour maintenir une rigidité suffisante dans les directions radiales (transversales) pour la reprise des efforts.

Dans un autre mode de réalisation, non représenté, la première et la deuxième liaisons mécaniques 5, 6 peuvent toutes deux être fixées rigidement à l'enveloppe externe et fixées à l'enveloppe interne de sorte à pouvoir à se déplacer et/ou se déformer en réponse à une dilatation et/ou une contraction relative de l'enveloppe interne. Dans ce cas, la ou les conduites d'amenée et/ou de soutirage de fluide sont montées, de préférence, au niveau de l'extrémité correspondant à la liaison mécanique 5,6 la moins flexible.

La première et/ou la deuxième liaison mécanique peuvent comprendre une pluralité de structures d'appui 7,8, par exemple au moins trois structures d'appui, réparties angulairement autour d'un axe central 200. Ces structures d'appui 7, 8 peuvent être séparées ou faire partie d'un anneau de liaison 9 s'étendant autour de l'axe central 200.

Les structures d'appui sont destinées à venir en contact avec l'enveloppe interne et/ou externe. Elles peuvent être soudées, collées ou liées aux enveloppes 2, 3 par un autre moyen approprié. Alternativement, elles peuvent être montées en force et encastrées entre les enveloppes 2, 3. Dans tous les cas, l'assemblage du réservoir est simplifié. Par exemple, la surface totale de soudure ou collage peut être réduite par rapport aux réservoirs de l'état de l'art comportant un ou deux cols.

Les structures d'appui 7,8 peuvent chacune comprendre au moins une protubérance intérieure 8 faisant saillie de la face intérieure de l'anneau de liaison et/ou au moins une protubérance extérieure 7 faisant saillie de la face extérieure de l'anneau de liaison. Dans ce cas, l'anneau de liaison est solidaire de l'enveloppe externe 3 et respectivement interne 2 uniquement au niveau de ces protubérances respectives. La surface des protubérances 7,8 qui est en contact respectivement avec l'enveloppe externe 3 ou l'enveloppe interne 2 peut présenter un profil complémentaire respectivement de la surface de l'enveloppe externe 3 ou de l'enveloppe interne 2.

La jonction entre les protubérances extérieures 7 et l'enveloppe externe 3, respectivement entre les protubérances intérieures 8 et l'enveloppe interne 2, peut par exemple être réalisée par soudure ou collage. Afin d'obtenir des rigidités ou flexibilités différentes, il est envisageable que les protubérances extérieures 7 et intérieures 8 soient jointes à l'enveloppe respective par des moyens techniques différents. Par exemple, les protubérances extérieures 7 peuvent être soudées à l'enveloppe externe 3, alors que les protubérances intérieures sont collées à l'enveloppe interne 2, ou vice versa.

Selon le niveau de contraintes mécaniques à tolérer, l'épaisseur de l'anneau peut être modifiée : plus fine pour des contraintes attendues modérées, plus épaisse pour des charges attendues plus importantes.

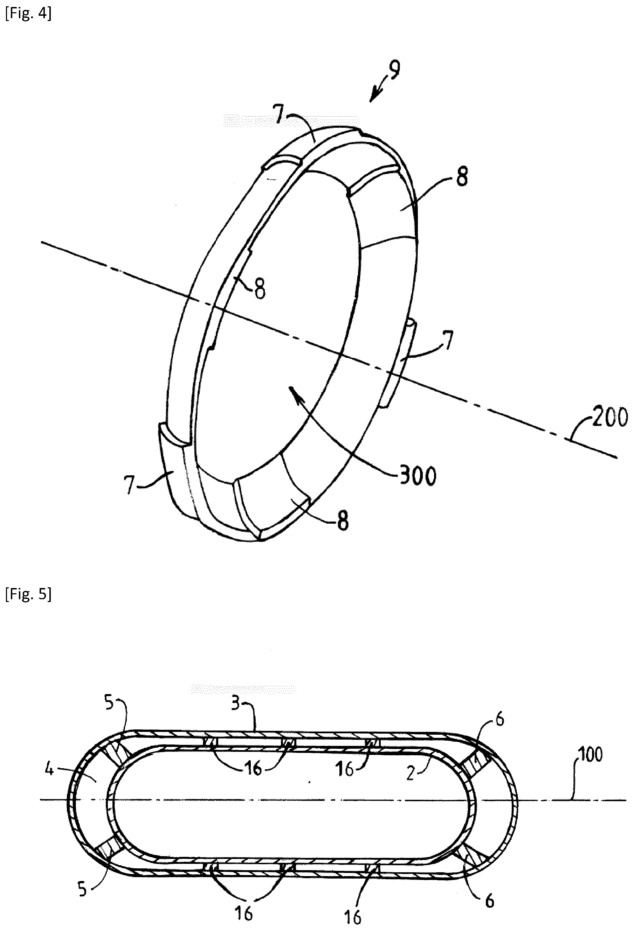

Selon le mode de réalisation illustré en figure 4, l'anneau de liaison 9 délimite un volume ouvert 300 dont la section, dans un plan orthogonal à l'axe central 200, présente une variation monotone lorsque l'on se déplace le long de l'axe central 200. C'est-à-dire que, lorsque l'on considère des sections successives dans des plans successifs orthogonaux à l'axe central 200, la surface de la section du volume ouvert 300 croît ou décroît de manière monotone selon que l'on se déplace respectivement de l'extrémité longitudinale vers la virole ou de la virole vers l'extrémité longitudinale. La face intérieure de l'anneau 9 présente ici une surface qui converge vers l'ouverture de l'anneau, et les protubérances 7,8 ont une épaisseur uniforme.

Alternativement, la surface de la face intérieure de l'anneau 9 peut être cylindrique et les protubérances 7,8 peuvent présenter une épaisseur qui varie de manière monotone le long de l'axe central 200. C'est-à-dire que la face intérieure de l'anneau 9 présente une surface parallèle à l'axe central 200 et les protubérances 7,8 un profil convergent vers l'ouverture de l'anneau. Même dans ce cas, lorsque l'on considère des sections successives dans des plans successifs orthogonaux à l'axe central 200, la surface de la section du volume ouvert 300 croît ou décroît de manière monotone selon que l'on se déplace respectivement de l'extrémité longitudinale vers la virole ou de la virole vers l'extrémité longitudinale.

La face intérieure de l'anneau de liaison 9 peut se trouver, lorsque le réservoir est assemblé, en vis-à-vis du dôme de l'enveloppe 2 interne.

La face extérieure de l'anneau de liaison 9 peut se trouver, lorsque le réservoir est assemblé, en vis-à-vis du dôme de l'enveloppe 3 externe.

La face intérieure de l'anneau de liaison 9 peut présenter un profil complémentaire du profil du dôme de l'enveloppe interne. Par exemple, la surface de la face intérieure de l'anneau 9 peut correspondre à une homothétie de la surface de l'enveloppe 2 interne.

La face extérieure de l'anneau de liaison 9 peut également présenter un profil complémentaire du profil du dôme de l'enveloppe 3 externe. Par exemple, la surface de la face extérieure de l'anneau 9 peut correspondre à une homothétie de la surface de l'enveloppe 3 externe.

Afin de maximiser le chemin thermique entre l'enveloppe interne et l'enveloppe externe et ainsi réduire les pertes thermiques, les structures d'appui sont décalées et de préférence réparties angulairement autour de l'axe central 200 de manière uniforme. La distance angulaire entre une protubérance intérieure et une protubérance extérieure adjacente est notamment égale à 360° divisé par le nombre total de protubérances intérieures et extérieures. Pour définir cette distance, on considère l'angle ayant son sommet sur l'axe central 200.

Dans un autre mode de réalisation non représenté, pour une même liaison mécanique 5,6 le nombre de protubérances intérieures 8 peut ne pas être égal au nombre de protubérances extérieures 7.

L'axe central 200 de l'anneau de liaison est de préférence parallèle ou coïncidant avec l'axe longitudinal 100. De cette manière, les efforts mécaniques sont répartis de manière plus équilibrée.

La section du volume ouvert 300 dans un plan orthogonal à l'axe central 200 a une forme qui correspond de préférence à celle de la section de l'enveloppe interne 2. Par exemple, cette section du volume ouvert 300 peut être sensiblement elliptique ou circulaire. Pour définir cette forme on ne prend pas en compte les protubérances 7,8. Des formes correspondantes (ou conjuguées) de cette section du volume ouvert 300 de l'anneau et de la section de l'enveloppe interne 2 permettent notamment de faciliter l'alignement et l'assemblage de ces deux éléments.

Dans une réalisation possible de l'invention illustrée en Figure 1, la structure de maintien comprend uniquement les première 5 et deuxième 6 liaisons mécaniques c'est-à-dire que la structure de maintien est constituée par les deux liaisons précitées. Alternativement, comme illustré en Figure 5, la structure de maintien peut comprendre une ou plusieurs liaisons mécaniques supplémentaires 16, par exemple lorsque la longueur du réservoir est particulièrement importante, ou lorsqu'il y a un besoin accru de tenue mécanique. Notamment, il peut y avoir au moins une troisième liaison mécanique 16 positionnée longitudinalement, selon l'axe longitudinal 100, entre la première liaison mécanique 5 et la deuxième liaison mécanique 6. De préférence, la répartition des liaisons mécaniques le long de l'axe longitudinal 100 est uniforme, afin d'optimiser les chemins thermiques et minimiser les pertes thermiques. De préférence, la au moins une troisième liaison mécanique est de type flexible.

L'invention concerne également des procédés d'assemblage d'un réservoir tel que décrit ci-avant. Des procédés de réalisation de l'enveloppe interne étant connus par ailleurs, la description va se limiter au montage de l'enveloppe interne dans l'enveloppe externe et à sa suspension par le biais des première et deuxième liaisons mécaniques.

L'enveloppe interne, comprenant un dôme à chaque extrémité longitudinale, doit être positionnée et suspendue à l'intérieur de l'enveloppe externe. Pour ce faire, l'enveloppe externe ne comprend initialement que la virole et un dôme à une extrémité longitudinale. Le dôme de l'autre extrémité longitudinale est assemblé par la suite, une fois l'enveloppe interne suspendue à l'intérieure de l'enveloppe externe.

Selon un premier procédé de fabrication, l'axe longitudinal 100 du réservoir est horizontal lors de l'assemblage. Le procédé comprend alors les étapes successives suivantes : fixation de la première liaison mécanique 5 au dôme de la première extrémité de l'enveloppe 2 interne; insertion de l'ensemble ainsi obtenu dans l'enveloppe externe; fixation de la première liaison mécanique 5 au dôme de la première extrémité de l'enveloppe 2 externe.

Selon un deuxième procédé de fabrication, l'axe longitudinal 10 du réservoir est vertical lors de l'assemblage. Le procédé comprend alors les étapes successives suivantes : fixation de la première liaison mécanique 5 au dôme de la première extrémité de l'enveloppe 2 interne; insertion de l'ensemble ainsi obtenu dans l'enveloppe externe; fixation de la première liaison mécanique 5 au dôme de la première extrémité de l'enveloppe 2 externe.

La fixation des liaisons mécaniques à l'enveloppe externe et à l'enveloppe interne peut être réalisée, comme décrit plus haut, par tout moyen adapté et notamment par soudure ou par collage.

Ainsi un réservoir cryogénique 1 selon l'invention est plus simple à fabriquer, présente une meilleure efficacité volumétrique et optimise le compromis entre l'absorption des contraintes mécaniques et la limitation des entrées thermiques.

## Revendications

1. Réservoir cryogénique de stockage de fluide liquéfié comprenant une enveloppe interne (2) délimitant un volume de stockage pour du fluide liquéfié et une enveloppe externe (3) disposée de façon espacée autour de l'enveloppe (2) interne, l'espace entre lesdites enveloppes interne (2) et externe (3) comprenant une isolation (4) thermique, les enveloppes interne (2) et externe (3) s'étendant selon une direction (100) longitudinale entre deux extrémités longitudinales, les enveloppes interne et externe présentant, au niveau de chaque extrémité longitudinale, une portion en forme de dôme, le réservoir (1) comprenant une structure de maintien de l'enveloppe interne (2) dans l'enveloppe (3) externe, la structure de maintien comprenant une première liaison (5) mécanique entre la première extrémité longitudinale (21) de l'enveloppe interne (2) et la première extrémité longitudinale (31) de l'enveloppe (3) externe, et une deuxième liaison (6) mécanique entre la seconde extrémité longitudinale (22) de l'enveloppe interne (2) et la seconde extrémité longitudinale (32) de l'enveloppe (3) externe, la première liaison (5) mécanique étant solidaire d'une part d'une région courbe du dôme (31) de la première extrémité de l'enveloppe externe (3) et d'autre part d'une région courbe du dôme (21) de la première extrémité de l'enveloppe interne (2), la deuxième liaison mécanique (6) étant solidaire d'une part d'une région courbe du dôme (32) de la seconde extrémité de l'enveloppe (3) externe et d'autre part d'une région courbe du dôme (22) de la seconde extrémité de l'enveloppe (2) interne, chaque portion en forme de dôme (21, 22, 31, 32) présentant une section transversale, dans un plan orthogonal à la direction longitudinale (100), de largeur qui varie entre une largeur minimum, au niveau de l'extrémité longitudinale, et une largeur maximum, la première liaison (5) mécanique étant solidaire du dôme (31) de la première extrémité de l'enveloppe (3) externe dans une région où la largeur de la section du dôme de l'enveloppe externe est comprise entre 50% et 100% de la largeur maximum, la première liaison mécanique (5) étant solidaire du dôme de la première extrémité de l'enveloppe (2) interne dans une région où la largeur de la section du dôme (21) de l'enveloppe interne est comprise entre 50% et 100% de la largeur maximum, la première (5) et/ou la deuxième liaison (6) mécanique comprenant plusieurs structures d'appui (7, 8) réparties angulairement autour d'un axe central (200), **caractérisé en ce que** les structures d'appui (7, 8) font partie d'un anneau (9) de liaison s'étendant autour de l'axe central (200) et délimitant de préférence un volume ouvert (300) dont la section, dans un plan orthogonal à l'axe central (200), présente une variation monotone lorsque l'on se déplace le long de l'axe central (200).

2. Réservoir cryogénique selon la revendication 1, **caractérisé en ce que** la deuxième liaison mécanique (6) est solidaire de la seconde extrémité de l'enveloppe (3) externe dans une région où la largeur de la section du dôme (32) de l'enveloppe (3) externe est comprise entre 50% et 100% de la largeur maximum, et/ou de la seconde extrémité de l'enveloppe (2) interne dans une région où la largeur de la section du dôme (22) de l'enveloppe interne est comprise entre 50% et 100% de la largeur maximum.

3. Réservoir cryogénique selon la revendication 2, **caractérisé en ce qu'**au moins une des liaisons mécaniques (5, 6) est solidaire du dôme (31, 32) respectif de l'enveloppe (3) externe dans une région où la largeur de la section du dôme (31, 32) de l'enveloppe externe est supérieure à 50% et strictement inférieure à 100% de la largeur maximum, et/ou solidaire du dôme (21, 22) respectif de l'enveloppe (2) interne dans une région où la largeur de la section du dôme (21, 22) de l'enveloppe interne (2) est supérieure à 50% et strictement inférieure à 100% de la largeur maximum.

4. Réservoir cryogénique selon l'une des revendications précédentes, **caractérisé en ce que** la première liaison (5) mécanique est fixée rigidement à l'enveloppe externe (3) et fixée à l'enveloppe interne (2) de sorte à pouvoir à se déplacer et/ou se déformer en réponse à une dilatation et/ou une contraction relative de l'enveloppe interne (2).

5. Réservoir cryogénique selon l'une des revendications précédentes, **caractérisé en ce que** l'anneau (9) de liaison possède une face intérieure en vis-à-vis du dôme (21, 22) de l'enveloppe (2) interne et une face extérieure en vis-à-vis du dôme (31, 32) de l'enveloppe (3) externe, la face intérieure ayant un profil complémentaire du profil du dôme (21, 22) de l'enveloppe interne, et/ou la face extérieure de l'anneau (9) de liaison a un profil complémentaire du profil du dôme (31, 32) de l'enveloppe externe.

6. Réservoir cryogénique selon la revendication 5, **caractérisé en ce que** la première (5) et/ou la deuxième liaison (6) mécanique comprend au moins trois structures d'appui (7, 8), comprenant chacune au moins une protubérance intérieure (8) faisant saillie de la face intérieure de l'anneau de liaison et au moins une protubérance extérieure (7) faisant saillie de la face extérieure de l'anneau de liaison, l'anneau (9) de liaison étant solidaire de l'enveloppe interne (2) et respectivement externe (3) uniquement au niveau de ces protubérances.

7. Réservoir cryogénique selon l'une des revendications précédentes, **caractérisé en ce que** les structures d'appui (7, 8) sont réparties angulairement autour de l'axe central (200) de manière uniforme.

8. Réservoir cryogénique selon l'une des revendications précédentes, **caractérisé en ce que** l'anneau (9) délimite un volume ouvert (300) dont la section, dans un plan orthogonal à l'axe central (200), présente une variation monotone lorsque l'on se déplace le long de l'axe central (200), ce volume ouvert (300) ayant une section de forme sensiblement elliptique ou circulaire.

9. Réservoir cryogénique selon l'une des revendications précédentes, **caractérisé en ce que** la structure de maintien comprend uniquement les première (5) et deuxième (6) liaisons mécaniques.

10. Réservoir cryogénique selon l'une des revendications 1 à 8, **caractérisé en ce que** la structure de maintien comprend au moins une troisième liaison mécanique (16) positionnée longitudinalement, selon l'axe longitudinal (100), entre la première liaison mécanique (5) et la deuxième liaison mécanique (6).

11. Procédé d'assemblage d'un réservoir selon l'une des revendications précédentes, l'axe longitudinal (100) étant horizontal lors de l'assemblage, comprenant les étapes successives suivantes
- a. fixation de la première liaison mécanique (5) au dôme de la première extrémité de l'enveloppe (2) interne;
- b. insertion de l'ensemble ainsi obtenu dans l'enveloppe externe;
- c. fixation de la première liaison mécanique (5) au dôme de la première extrémité de l'enveloppe (2) externe.

12. Procédé d'assemblage d'un réservoir selon l'une des revendications 1 à 10, l'axe longitudinal (100) étant vertical lors de l'assemblage, comprenant les étapes successives suivantes
- a. fixation de la première liaison mécanique (5) au dôme de la première extrémité de l'enveloppe (2) externe;
- b. insertion de l'enveloppe interne dans l'enveloppe externe;
- c. fixation de la première liaison mécanique (5) au dôme de la première extrémité de l'enveloppe (2) interne.

## Patentansprüche

1. Ein kryogener Behälter zur Lagerung von verflüssigtem Fluid, umfassend eine innere Hülle (2), die ein Speichervolumen für verflüssigtes Fluid begrenzt, und eine äußere Hülle (3), die beabstandet um die innere Hülle (2) angeordnet ist, wobei der Raum zwischen der inneren (2) und der äußeren (3) Hülle eine Wärmeisolierung (4) umfasst, wobei sich die innere (2) und die äußere (3) Hülle entlang einer Längsrichtung (100) zwischen zwei Längsenden erstrecken, wobei die innere und die äußere Hülle an jedem Längsende einen kuppelförmigen Abschnitt aufweisen, wobei der Behälter (1) eine Struktur zum Halten der inneren Hülle (2) in der äußeren Hülle (3) umfasst, wobei die Haltestruktur eine erste mechanische Verbindung (5) zwischen dem ersten Längsende (21) der inneren Hülle (2) und dem ersten Längsende (31) der äußeren Hülle (3) und eine zweite mechanische Verbindung (6) zwischen dem zweiten Längsende (22) der inneren Hülle (2) und dem zweiten Längsende (32) der äußeren Hülle (3) umfasst, wobei die erste mechanische Verbindung (5) einerseits mit einem gekrümmten Bereich der Kuppel (31) des ersten Endes der äußeren Hülle (3) und andererseits mit einem gekrümmten Bereich der Kuppel (21) des ersten Endes der inneren Hülle (2) fest verbunden ist, wobei die zweite mechanische Verbindung (6) einerseits mit einem gekrümmten Bereich der Kuppel (32) des zweiten Endes der äußeren Hülle (3) und andererseits mit einem gekrümmten Bereich der Kuppel (22) des zweiten Endes der inneren Hülle (2) fest verbunden ist, wobei jeder kuppelförmige Abschnitt (21, 22, 31, 32) einen Querschnitt in einer zur Längsrichtung (100) orthogonalen Ebene aufweist, dessen Breite zwischen einer minimalen Breite am Längsende und einer maximalen Breite variiert, wobei die erste mechanische Verbindung (5) mit der Kuppel (31) des ersten Endes der äußeren Hülle (3) in einem Bereich fest verbunden ist, in dem die Breite des Querschnitts der Kuppel der äußeren Hülle zwischen 50 % und 100 % der maximalen Breite liegt, wobei die erste mechanische Verbindung (5) mit der Kuppel des ersten Endes der inneren Hülle (2) in einem Bereich fest verbunden ist, in dem die Breite des Querschnitts der Kuppel (21) der inneren Hülle zwischen 50 % und 100 % der maximalen Breite liegt, wobei die erste (5) und/oder die zweite mechanische Verbindung (6) mehrere Stützstrukturen (7, 8) umfassen, die winklig um eine Mittelachse (200) verteilt sind, **dadurch gekennzeichnet, dass** die Stützstrukturen (7, 8) Teil eines Verbindungsrings (9) sind, der sich um die Mittelachse (200) erstreckt und vorzugsweise ein offenes Volumen (300) begrenzt, dessen Querschnitt in einer zur Mittelachse (200) orthogonalen Ebene eine monotone Änderung aufweist, wenn man sich entlang der Mittelachse (200) bewegt.

2. Kryogener Behälter nach Anspruch 1, **dadurch gekennzeichnet, dass** die zweite mechanische Verbindung (6) mit dem zweiten Ende der äußeren Hülle (3) in einem Bereich fest verbunden ist, in dem die Breite des Querschnitts der Kuppel (32) der äußeren Hülle (3) zwischen 50 % und 100 % der maximalen Breite liegt, und/oder mit dem zweiten Ende der inneren Hülle (2) in einem Bereich, in dem die Breite des Querschnitts der Kuppel (22) der inneren Hülle zwischen 50 % und 100 % der maximalen Breite liegt.

3. Kryogener Behälter nach Anspruch 2, **dadurch gekennzeichnet, dass** mindestens eine der mechanischen Verbindungen (5, 6) mit der jeweiligen Kuppel (31, 32) der äußeren Hülle (3) in einem Bereich fest verbunden ist, in dem die Breite des Querschnitts der Kuppel (31, 32) der äußeren Hülle größer als 50 % und streng kleiner als 100 % der maximalen Breite ist, und/oder mit der jeweiligen Kuppel (21, 22) der inneren Hülle (2) in einem Bereich fest verbunden ist, in dem die Breite des Querschnitts der Kuppel (21, 22) der inneren Hülle (2) größer als 50 % und streng kleiner als 100 % der maximalen Breite ist.

4. Kryogener Behälter nach einem der vorhergehenden Ansprüche, **dadurch gekennzeichnet, dass** die erste mechanische Verbindung (5) starr an der äußeren Hülle (3) befestigt ist und an der inneren Hülle (2) so befestigt ist, dass sie sich als Reaktion auf eine relative Ausdehnung und/oder Kontraktion der inneren Hülle (2) bewegen und/oder verformen kann.

5. Kryogener Behälter nach einem der vorhergehenden Ansprüche, **dadurch gekennzeichnet, dass** der Verbindungsring (9) eine Innenfläche aufweist, die der Kuppel (21, 22) der inneren Hülle (2) gegenüberliegt, und eine Außenfläche, die der Kuppel (31, 32) der äußeren Hülle (3) gegenüberliegt, wobei die Innenfläche ein komplementäres Profil zum Profil der Kuppel (21, 22) der inneren Hülle aufweist, und/oder die Außenfläche des Verbindungsrings (9) ein komplementäres Profil zum Profil der Kuppel (31, 32) der äußeren Hülle aufweist.

6. Kryogener Behälter nach Anspruch 5, **dadurch gekennzeichnet, dass** die erste (5) und/oder die zweite mechanische Verbindung (6) mindestens drei Stützstrukturen (7, 8) umfasst, die jeweils mindestens einen inneren Vorsprung (8), der von der Innenfläche des Verbindungsrings vorsteht, und mindestens einen äußeren Vorsprung (7), der von der Außenfläche des Verbindungsrings vorsteht, umfassen, wobei der Verbindungsring (9) nur auf der Höhe dieser Vorsprünge mit der inneren Hülle (2) bzw. der äußeren Hülle (3) fest verbunden ist.

7. Kryogener Behälter nach einem der vorhergehenden Ansprüche, **dadurch gekennzeichnet, dass** die Stützstrukturen (7, 8) gleichmäßig winklig um die Mittelachse (200) verteilt sind.

8. Kryogener Behälter nach einem der vorhergehenden Ansprüche, **dadurch gekennzeichnet, dass** der Ring (9) ein offenes Volumen (300) begrenzt, dessen Querschnitt in einer zur Mittelachse (200) orthogonalen Ebene eine monotone Änderung aufweist, wenn man sich entlang der Mittelachse (200) bewegt, wobei dieses offene Volumen (300) einen Querschnitt von im Wesentlichen elliptischer oder kreisförmiger Form aufweist.

9. Kryogener Behälter nach einem der vorhergehenden Ansprüche, **dadurch gekennzeichnet, dass** die Haltestruktur nur die erste (5) und zweite (6) mechanische Verbindung umfasst.

10. Kryogener Behälter nach einem der Ansprüche 1 bis 8, **dadurch gekennzeichnet, dass** die Haltestruktur mindestens eine dritte mechanische Verbindung (16) umfasst, die in Längsrichtung entlang der Längsachse (100) zwischen der ersten mechanischen Verbindung (5) und der zweiten mechanischen Verbindung (6) positioniert ist.

11. Ein Verfahren zum Zusammenbau eines Behälters nach einem der vorhergehenden Ansprüche, wobei die Längsachse (100) während des Zusammenbaus horizontal ist, umfassend die folgenden aufeinanderfolgenden Schritte
a. Befestigen der ersten mechanischen Verbindung (5) an der Kuppel des ersten Endes der inneren Hülle (2);
b. Einsetzen der so erhaltenen Anordnung in die äußere Hülle;
c. Befestigen der ersten mechanischen Verbindung (5) an der Kuppel des ersten Endes der äußeren Hülle (2).

12. Ein Verfahren zum Zusammenbau eines Behälters nach einem der Ansprüche 1 bis 10, wobei die Längsachse (100) während des Zusammenbaus vertikal ist, umfassend die folgenden aufeinanderfolgenden Schritte
a. Befestigen der ersten mechanischen Verbindung (5) an der Kuppel des ersten Endes der äußeren Hülle (2);
b. Einsetzen der inneren Hülle in die äußere Hülle;
c. Befestigen der ersten mechanischen Verbindung (5) an der Kuppel des ersten Endes der inneren Hülle (2).

## Claims

1. A cryogenic tank for storing liquefied fluid comprising an inner shell (2) delimiting a storage volume for liquefied fluid and an outer shell (3) arranged spaced apart around the inner shell (2), the space between said inner (2) and outer (3) shells comprising thermal insulation (4), the inner (2) and outer (3) shells extending along a longitudinal direction (100) between two longitudinal ends, the inner and outer shells having, at each longitudinal end, a dome-shaped portion, the tank (1) comprising a structure for holding the inner shell (2) in the outer shell (3), the holding structure comprising a first mechanical connection (5) between the first longitudinal end (21) of the inner shell (2) and the first longitudinal end (31) of the outer shell (3), and a second mechanical connection (6) between the second longitudinal end (22) of the inner shell (2) and the second longitudinal end (32) of the outer shell (3), the first mechanical connection (5) being integral on the one hand with a curved region of the dome (31) of the first end of the outer shell (3) and on the other hand with a curved region of the dome (21) of the first end of the inner shell (2), the second mechanical connection (6) being integral on the one hand with a curved region of the dome (32) of the second end of the outer shell (3) and on the other hand with a curved region of the dome (22) of the second end of the inner shell (2), each dome-shaped portion (21, 22, 31, 32) having a transverse section, in a plane orthogonal to the longitudinal direction (100), of a width that varies between a minimum width, at the longitudinal end, and a maximum width, the first mechanical connection (5) being integral with the dome (31) of the first end of the outer shell (3) in a region where the width of the section of the dome of the outer shell is comprised between 50% and 100% of the maximum width, the first mechanical connection (5) being integral with the dome of the first end of the inner shell (2) in a region where the width of the section of the dome (21) of the inner shell is comprised between 50% and 100% of the maximum width, the first (5) and/or the second mechanical connection (6) comprising several support structures (7, 8) distributed angularly around a central axis (200), **characterized in that** the support structures (7, 8) are part of a connection ring (9) extending around the central axis (200) and preferably delimiting an open volume (300) whose section, in a plane orthogonal to the central axis (200), presents a monotonic variation when moving along the central axis (200).

2. The cryogenic tank according to claim 1, **characterized in that** the second mechanical connection (6) is integral with the second end of the outer shell (3) in a region where the width of the section of the dome (32) of the outer shell (3) is comprised between 50% and 100% of the maximum width, and/or with the second end of the inner shell (2) in a region where the width of the section of the dome (22) of the inner shell is comprised between 50% and 100% of the maximum width.

3. The cryogenic tank according to claim 2, **characterized in that** at least one of the mechanical connections (5, 6) is integral with the respective dome (31, 32) of the outer shell (3) in a region where the width of the section of the dome (31, 32) of the outer shell is greater than 50% and strictly less than 100% of the maximum width, and/or integral with the respective dome (21, 22) of the inner shell (2) in a region where the width of the section of the dome (21, 22) of the inner shell (2) is greater than 50% and strictly less than 100% of the maximum width.

4. The cryogenic tank according to one of the preceding claims, **characterized in that** the first mechanical connection (5) is rigidly fixed to the outer shell (3) and fixed to the inner shell (2) so as to be able to move and/or deform in response to a relative expansion and/or contraction of the inner shell (2).

5. The cryogenic tank according to one of the preceding claims, **characterized in that** the connection ring (9) has an inner face facing the dome (21, 22) of the inner shell (2) and an outer face facing the dome (31, 32) of the outer shell (3), the inner face having a profile complementary to the profile of the dome (21, 22) of the inner shell, and/or the outer face of the connection ring (9) has a profile complementary to the profile of the dome (31, 32) of the outer shell.

6. The cryogenic tank according to claim 5, **characterized in that** the first (5) and/or the second mechanical connection (6) comprises at least three support structures (7, 8), each comprising at least one inner protrusion (8) projecting from the inner face of the connection ring and at least one outer protrusion (7) projecting from the outer face of the connection ring, the connection ring (9) being integral with the inner shell (2) and respectively the outer shell (3) only at the level of these protrusions.

7. The cryogenic tank according to one of the preceding claims, **characterized in that** the support structures (7, 8) are distributed angularly around the central axis (200) in a uniform manner.

8. The cryogenic tank according to one of the preceding claims, **characterized in that** the ring (9) delimits an open volume (300) whose section, in a plane orthogonal to the central axis (200), presents a monotonic variation when moving along the central axis (200), this open volume (300) having a section of substantially elliptical or circular shape.

9. The cryogenic tank according to one of the preceding claims, **characterized in that** the holding structure comprises only the first (5) and second (6) mechanical connections.

10. The cryogenic tank according to one of claims 1 to 8, **characterized in that** the holding structure comprises at least a third mechanical connection (16) positioned longitudinally, along the longitudinal axis (100), between the first mechanical connection (5) and the second mechanical connection (6).

11. A method for assembling a tank according to one of the preceding claims, the longitudinal axis (100) being horizontal during assembly, comprising the following successive steps
a. fixing the first mechanical connection (5) to the dome of the first end of the inner shell (2);
b. inserting the assembly thus obtained into the outer shell;
c. fixing the first mechanical connection (5) to the dome of the first end of the external shell (2).

12. A method for assembling a tank according to one of claims 1 to 10, the longitudinal axis (100) being vertical during assembly, comprising the following successive steps
a. fixing the first mechanical connection (5) to the dome of the first end of the external shell (2);
b. inserting the inner shell into the outer shell;
c. fixing the first mechanical connection (5) to the dome of the first end of the inner shell (2).
